# FASCICULE DE BREVET EUROPEEN

(11) **EP 2 205 452 B1**
(45) Date de publication et mention de la délivrance du brevet: **06.07.2011**
(21) Numéro de dépôt: 08836382.5
(22) Date de dépôt: 24.07.2008
(51) Int. Cl.: B60C 9/02, B60C 9/22

(54) **PNEUMATIQUE UTILISANT UNE STRUCTURE DE RENFORT À FIBRES DE SECTION APLATIE**
REIFEN MIT VERSTÄRKUNGSSTRUKTUR MIT FASERN VON ABGEFLACHTEM QUERSCHNITT
TYRE USING A REINFORCING STRUCTURE WITH FIBRES OF FLATTENED CROSS SECTION

(30) Priorité: 05.10.2007 FR 0707030
(43) Date de publication de la demande: 14.07.2010
(73) Titulaire: Société de Technologie MICHELIN, 63000 Clermont-Ferrand (FR); Michelin Recherche et Technique S.A., 1763 Granges-Paccot (CH)
(72) Inventeur: DEAL, Michel, F-03110 St.-Remy-en-Rollat (FR)
(74) Mandataire: Randl, Oliver Georg
(86) Numéro de dépôt international: PCT/FR2008/001105
(87) Numéro de publication internationale: WO 2009/044014

(56) Documents cités:
- EP-A- 0 605 177
- EP-A- 0 648 621
- EP-A- 1 167 081
- WO-A-2004/085173
- JP-A- 7 172 106
- US-B1- 6 318 432

## Description

L'invention concerne, de façon générale, l'équipement des véhicules à moteur.

Plus précisément, l'invention concerne un pneu comprenant une enveloppe étanche de gomme et une structure de renfort essentiellement formée d'une pluralité de fibres individuellement noyées dans la gomme et agencées en plusieurs couches, selon le préambule de la revendication 1.

Un tel pneu est par exemple décrit dans le brevet US 6 318 432 B

Les performances des pneumatiques actuels, notamment en termes de longévité, d'étanchéité et de résistance, sont aujourd'hui obtenues au prix d'une complexité élevée, tant pour ce qui concerne la structure matérielle de ces pneus que pour ce qui concerne les étapes et opérations à mettre en oeuvre pour leur fabrication.

L'invention, qui se situe dans ce contexte, a pour but de proposer un pneu qui, à performances égales, soit structurellement plus simple et plus facile à fabriquer que les pneus actuels.

A cette fin, le pneu de l'invention, par ailleurs conforme à la définition générique qu'en donne le préambule ci-dessus, est essentiellement caractérisé en ce que certaines au moins des fibres de la structure de renfort ont chacune une section transversale totalement connexe, de forme aplatie, et présentant des première et deuxième dimensions mutuellement orthogonales dont la première, ou épaisseur, est inférieure à la deuxième dimension ou largeur, et s'étend suivant une direction sensiblement radiale du pneu.

Dans le cas où le premier angle est égal à 90 degrés, chaque fibre orientée suivant cet angle se trouve ainsi disposée dans un plan méridien du pneu, c'est-à-dire dans un plan passant par l'axe du pneu.

On rappelle qu'une surface totalement connexe est une surface dont deux parties quelconques sont nécessairement liées entre elles.

A titre de contre-exemple de fibre à section transversale totalement connexe, on peut notamment citer les câbles à plusieurs brins torsadés du type de ceux qui sont traditionnellement utilisés dans les structures de renfort de pneus, la section transversale d'un câble de ce type étant formée par la juxtaposition des sections transversales des différents brins constitutifs de ce câble, dont chacun est indépendant de l'autre et libre par rapport à lui.

Par ailleurs, l'expression "direction radiale" est ici définie comme englobant toute direction qui est à la fois inscrite dans un demi-plan méridien s'étendant à partir de l'axe du pneu, et qui passe elle-même par le centre de la trace, dans ce demi-plan méridien, du volume interne sensiblement toroïdal délimité par le pneu.

En d'autres termes, l'épaisseur de chacune des fibres de section aplatie s'étend donc suivant une direction sensiblement normale à l'enveloppe du pneu.

L'invention repose en effet sur la découverte du fait qu'en contrepartie de leurs propriétés mécaniques avantageuses et universellement reconnues, les câbles à brins multiples utilisés aujourd'hui pour la réalisation des renforts dans les pneumatiques pouvaient aussi favoriser l'apparition de phénomènes indésirables, la complexité structurelle des pneumatiques actuels étant justement induite par la nécessité de réduire ces phénomènes.

En particulier, les câbles à brins multiples, dont la section est généralement circulaire, ont la propriété d'opposer une résistance importante aux efforts de traction appliqués par la pression interne du pneu, et de fléchir facilement pour permettre les déformations du pneumatique au contact avec le sol.

En revanche, si chaque câble est individuellement bien noyé dans la gomme du pneu, cette dernière ne pénètre pas au coeur du câble, de sorte qu'aucun des brins de ce dernier n'est individuellement noyé dans la gomme et que la section transversale de ce câble n'est donc pas totalement connexe.

Il en résulte notamment que le câble sert de guide de propagation à tous les fluides qui peuvent l'atteindre, notamment à l'air piégé dans le pneu et à l'humidité en cas de blessure de ce dernier.

De plus, toute flexion du câble s'accompagne nécessairement d'un déplacement longitudinal relatif entre les brins de ce dernier, avec l'apparition d'un frottement aux interfaces en cas de contact entre ces brins, ou d'un cisaillement de la gomme du pneu en l'absence de contact, chacun de ces phénomènes parasites étant indésirable.

En prévoyant que certaines au moins des fibres de la structure de renfort aient une section transversale totalement connexe et aplatie, l'invention permet à la fois de renforcer l'étanchéité du pneu et de réduire la fatigue mécanique de ce dernier.

Les fibres de section aplatie présentent par exemple en section une largeur et une épaisseur dont le rapport de la première à la seconde est au moins égal à cinq, cette section pouvant notamment prendre une forme rectangulaire, ovale ou elliptique.

Dans un mode de réalisation possible de l'invention, certaines au moins des fibres de section transversale aplatie sont formées chacune d'un seul filament.

Cependant, il est également possible de prévoir que certaines au moins des fibres de section transversale aplatie soient formées chacune d'une pluralité de filaments sensiblement parallèles entre eux et noyés dans une matrice assurant l'étanchéité et la cohésion de cette fibre.

Dans tous les cas, les fibres de section transversale aplatie sont avantageusement réalisées chacune dans un matériau (composite ou non) présentant un module de traction compris entre 3 GPa et 250 GPa, chaque fibre de la couche de sommet présentant un module de traction au moins égal à 30 GPa.

De préférence, les fibres de section transversale aplatie de chaque couche présentent entre elles, dans chaque couche, un écartement non nul inférieur à 2 millimètres et par exemple au plus égal à 1 millimètre.

Les fibres de section transversale aplatie peuvent être réalisées dans un matériau choisi dans l'ensemble comprenant l'acier, l'aluminium, le verre, un polymère appartenant à la famille du polyester, du polyéthylène, du polyamide, de l'aramide, ou du polyvinylalcool, un composite formé de filaments de verre ou d'un tel polymère noyés dans une résine, et notamment un composite de filaments de polyéthylène encollés par du résorcinol-formaldéhyde-latex.

Dans un mode de réalisation possible de l'invention, les moyens de liaison comprennent une couche de liaison disposée entre la couche carcasse et la couche de sommet et les couplant l'une à l'autre.

De préférence, le matériau constituant cette couche de liaison présente un module d'extension sécant à 10% de déformation au moins égal à 50 MPa.

En particulier, le matériau constituant cette couche de liaison peut comprendre du polyester, une résine époxy, ou un matériau présentant un module d'extension sécant à 10% de déformation au moins égal au module d'extension du polyester ou de la résine époxy.

Il peut cependant être également judicieux de prévoir que le matériau constituant la couche de liaison présente un module d'extension sécant à 10% de déformation au plus égal à 300 MPa.

Dans un autre mode de réalisation, les moyens de liaison peuvent au moins comprendre des points de liaison liant directement et individuellement les fibres de section transversale aplatie de la couche carcasse à chaque fibre de section transversale aplatie de la couche de sommet, la couche carcasse et la couche de sommet formant ainsi ensemble une structure grillagée.

Dans le cas où les fibres de section transversale aplatie des couches carcasse et de sommet sont réalisées dans un composite formé de filaments noyés dans une résine primaire et secondaire, les points de liaison sont avantageusement réalisés par liaison de la résine secondaire des fibres de la couche carcasse et de là résine secondaire des fibres de la couche de sommet.

Dans un mode de réalisation facile à industrialiser, la couche de sommet peut être formée par un enroulement circonférentiel d'un ruban, dont les différentes spires constituent les différentes fibres de cette couche.

La cohésion de la structure de renfort est par exemple assurée en prévoyant notamment que chacune des fibres de la couche carcasse soit repliée et maintenue à ses deux extrémités sur des tringles circulaires respectives renforçant les talons internes respectifs du pneu.

Par ailleurs, la couche de sommet s'étend de préférence autour de la couche carcasse et dans une zone restreinte, sensiblement parallèle à la bande de roulement.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue partielle écorchée en perspective d'un pneu conforme à un mode de réalisation de l'invention dans lequel les moyens de liaison comprennent une couche de liaison;
- la figure 2 est une vue agrandie d'un détail repéré par la référence II sur la figure 1;
- la figure 3 illustre séparément un détail extrait de la figure 1;
- la figure 4 est une vue agrandie d'un détail repéré par la référence IV sur la figure 3;
- la figure 5 est une vue partielle écorchée en perspective d'un pneu conforme à un mode de réalisation de l'invention dans lequel les moyens de liaison comprennent des points de liaison reliant directement les fibres de la couche carcasse aux fibres de la couche de sommet;
- la figure 6 est une vue partielle écorchée en perspective d'un pneu conforme à un mode de réalisation de l'invention dans lequel les moyens de liaison comprennent une couche de liaison et dans lequel la couche de sommet comporte des fibres de différentes largeurs et éventuellement de différentes natures; et
- la figure 7 est une vue en perspective d'une couche de sommet pour un pneu conforme à l'invention, cette couche étant réalisée par enroulement hélicoïdal d'un ruban et refendue sur ses bords.

Comme annoncé précédemment, l'invention concerne un pneumatique essentiellement considéré du point de vue de sa structure.

Un pneu 1 comprend, de façon traditionnelle, une enveloppe étanche de gomme 2 et une structure de renfort essentiellement formée d'une pluralité de fibres individuellement noyées dans la gomme et agencées en plusieurs couches.

La gomme et la structure de renfort concourent à définir des talons 11 par lesquels le pneu est monté sur la jante, une bande de roulement 12 par laquelle le pneu s'appuie sur la route, et des flancs 13.

La gomme 2, dont la composition n'est généralement pas homogène dans tout le pneu mais peut au contraire être adaptée aux différentes fonctions qu'elle doit assurer aux différents emplacements qu'elle occupe dans le pneu, est essentiellement constituée de mélanges à base de caoutchouc incorporant diverses charges ou additifs connus de l'homme du métier.

Dans un pneu conforme à l'invention, la structure de renfort est formée d'une couche carcasse 3, d'une couche de sommet 4, et de moyens de liaison 21.

La couche de carcasse 3 peut typiquement s'étendre à la fois sous la bande de roulement 12 et sous les flancs 13 du pneu.

Chacune des fibres 30 de la couche carcasse 3 est par exemple maintenue, par ses deux extrémités repliées, sur des tringles 5, de section par exemple circulaire, qui renforcent respectivement les talons droit et gauche 11 du pneu.

Les fibres 30 de cette couche carcasse 3 forment, avec le plan médian P perpendiculaire à l'axe X du pneu, un premier angle A1 aussi proche que possible de 90 degrés, et au moins égal à 75 degrés.

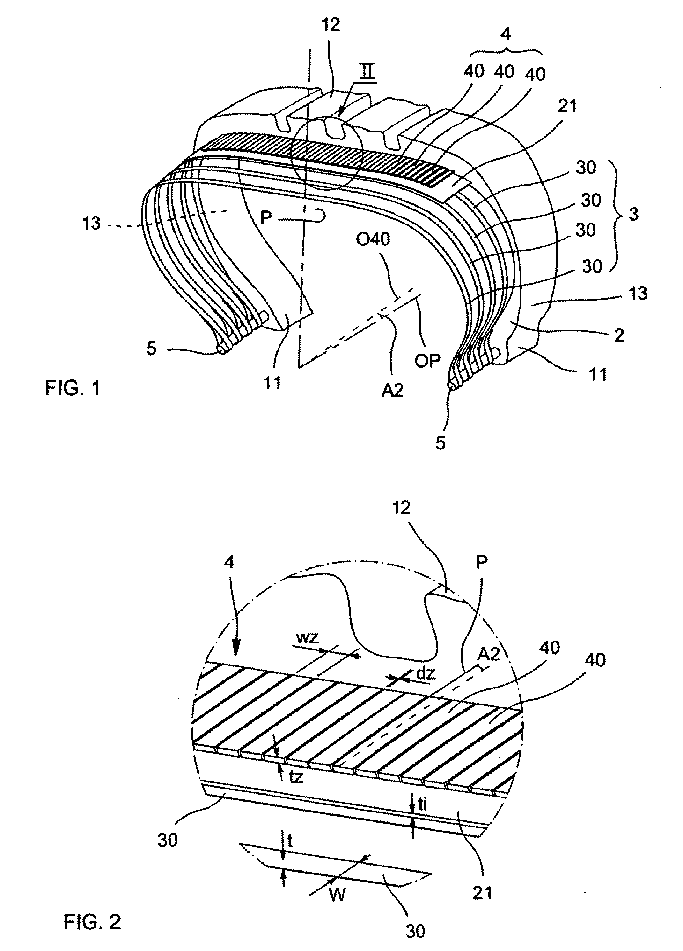

Comme le montrent les figures 1, 5, et 6, la couche de sommet 4 peut quant à elle s'étendre autour de la couche carcasse 3, mais de préférence seulement dans une zone restreinte, sous la bande de roulement 12, et en restant sensiblement parallèle à cette bande de roulement.

Cette couche de sommet peut être essentiellement constituée de plusieurs fibres 40 comme le montrent notamment les figures 1, 5 et 6.

Cependant, cette couche de sommet peut aussi être essentiellement constituée d'une seule fibre 40 conformée en anneau et occupant toute la largeur, ou la plus grande partie au moins de la largeur, de la couche sommet 4, cette fibre unique constituant ainsi une virole.

Chaque fibre 40 de la couche de sommet 4 forme, avec le plan médian P du pneu, un deuxième angle A2 aussi proche que possible de 0 degré, et au plus égal à 15 degrés.

Cet angle A2 est illustré à la figure 1 entre une trace OP du plan médian P sur un plan perpendiculaire à ce plan P et la projection orthogonale 040, sur ce plan perpendiculaire, de l'axe de symétrie d'une fibre 40.

Les moyens de liaison, qui peuvent prendre plusieurs formes de réalisation différentes, et notamment celle d'une couche de liaison 21, ont pour fonction de lier entre elles les fibres 30 et 40 de la couche carcasse 3 et de la couche sommet 4, et en particulier de fixer la position angulaire relative des fibres 30 par rapport à la fibre 40 ou aux fibres 40.

Par ailleurs, la structure de renfort constituée par les couches 3 et 4 comprend des fibres dont chacune présente une section transversale totalement connexe et de forme aplatie.

Dans la suite de la présente description, l'hypothèse sera faite que chacune des couches 3 et 4 comprend plusieurs fibres respectives 30 et 40, et que chacune de ces fibres 30 et 40 présente une section transversale totalement connexe et de forme aplatie, cette situation correspondant au mode de réalisation préféré tout en restant néanmoins optionnelle.

La connexité de la section transversale de chacune des fibres 30 et 40 définit ici la propriété de cette section de se présenter sous la forme d'un seul bloc ou encore, de façon plus scientifique, de constituer un domaine totalement connexe au sens topologique du terme.

Pour ce faire, chacune des fibres 30 et 40 peut par exemple être formée d'un seul filament, en particulier d'un filament constitué de métal, d'un alliage métallique, ou d'un polymère.

Deux parties quelconques de la section transversale de la fibre appartiennent alors à une même masse constituée d'un même matériau.

Néanmoins, chacune de ces fibres 30 et 40 peut aussi être formée d'une pluralité de filaments métalliques, textiles, de verre ou de polymère sensiblement parallèles entre eux, ces filaments étant noyés dans une matrice ayant pour fonction d'assurer l'étanchéité et la cohésion de la fibre.

Deux parties quelconques de la section transversale de la fibre sont alors au moins reliées entre elles par l'intermédiaire de la matrice.

La forme aplatie de la section de chacune des fibres 30 et 40 est ici définie par le fait que cette section présente deux dimensions mutuellement orthogonales dont la première, appelée "épaisseur", est inférieure à la deuxième, appelée "largeur", l'épaisseur s'étendant suivant une direction sensiblement radiale du pneu.

Pour autant qu'elle soit aplatie, la section de chacune des fibres 30 et 40 peut prendre n'importe quelle forme spécifique, et peut notamment être de forme rectangulaire (figure 2), ovale ou elliptique.

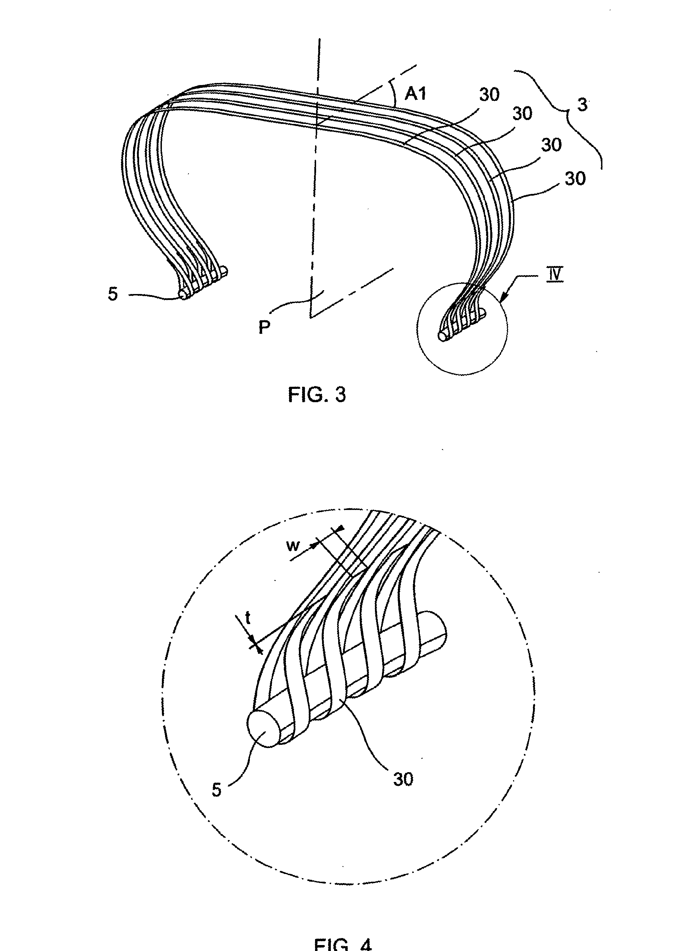

Par exemple, le rapport w/t de la largeur w de la section transversale de chaque fibre 30 (figures 2 et 4) à l'épaisseur t de cette section peut être égal à 5 ou plus, la même gamme de valeurs pouvant être appliquée au rapport wz/tz de la largeur wz de la section transversale de chaque fibre 40 (figure 2) à l'épaisseur tz de cette section.

De préférence, chacune des fibres 30 et 40 est réalisée dans un matériau, composite ou non, présentant un module de traction compris entre 3 GPa et 250 GPa, chaque fibre 40 de la couche de sommet présentant un module de traction au moins égal à 30 GPa.

Ces fibres 30 et 40 peuvent notamment être réalisées dans un matériau tel que l'acier, l'aluminium, le verre, un polymère appartenant à la famille du polyester, du polyéthylène, du polyamide, de l'aramide, ou du polyvinylalcool, ou dans un composite formé de filaments de verre ou d'un tel polymère noyés dans une résine. Autrement dit, chacune des fibres 30 et 40 peut être constituée d'un seul matériau isotrope ou orthotrope (ce dernier étant par exemple obtenu par orientation des chaînes moléculaires d'un extrudé textile ou par fibrage d'un laminé acier), ou être constituée d'un composite de filaments noyés dans une matrice empêchant tout mouvement relatif des filaments autres que celui obtenu par cisaillement de la matrice.

Dans tous les cas, la fibre, vue de l'extérieur, constitue une lanière étanche.

Deux exemples de composites utilisables sont d'une part le CVR (Composite de fibres de verre et de résine) et d'autre part des filaments de polyéthylène (PET) réunis en une fibre unique par encollage au résorcinol-formaldéhyde-latex (RFL), c'est-à-dire d'un encollage à l'aide d'un primaire et d'un secondaire, le primaire assurant la cohésion des filaments de la fibre, et le secondaire, à base de latex, faisant le lien entre le primaire et la gomme du pneu.

Par ailleurs, les fibres adjacentes 30 de la couche 3 présentent entre elles un écartement non nul avantageusement inférieur à 2 millimètres, et par exemple au plus égal à 1 millimètre, la même règle pouvant être appliquée aux fibres adjacentes 40 de la couche 4.

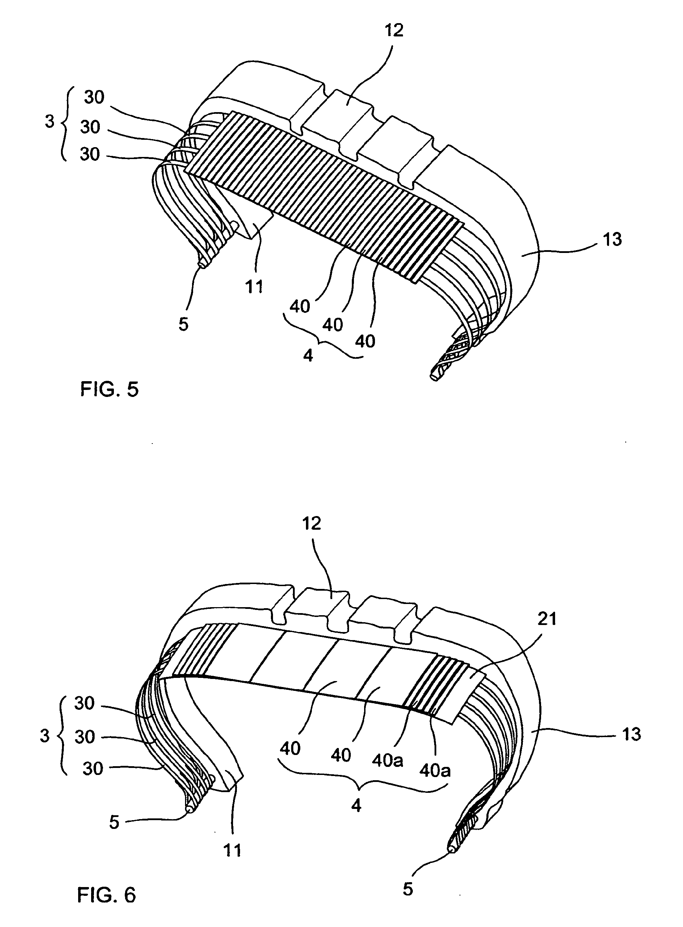

Les figures 1 et 6 illustrent un mode de réalisation dans lequel les moyens de liaison comprennent une couche de liaison 21, d'épaisseur ti (figure 2), disposée entre la couche carcasse 3 et la couche de sommet 4, et couplant l'une à l'autre ces couches 3 et 4.

Cette couche de liaison 21 est de préférence réalisée dans un matériau présentant un module d'extension sécant à 10% de déformation au moins égal à 50 MPa, sans toutefois avoir besoin de dépasser 300 MPa.

Le matériau constituant cette couche de liaison 21 peut par exemple comprendre du polyester, une résine époxy, ou un matériau présentant un module d'extension sécant à 10% de déformation au moins égal au module d'extension du polyester ou de la résine époxy.

Dans un autre mode de réalisation, illustré à la figure 5, les moyens de liaison sont essentiellement ou exclusivement constitués par des points de liaison liant directement et individuellement les fibres 30 de la couche carcasse 3 aux fibres 40 de la couche de sommet 4.

Dans ce mode de réalisation, la couche carcasse 3 et la couche de sommet 4 forment donc ensemble une structure grillagée.

Dans le cas où les fibres 30 et 40 des couches respectives 3 et 4 sont réalisées dans un composite formé de filaments noyés dans une résine primaire, les points de liaison peuvent avantageusement être constitués de résine secondaire.

Lorsque ces fibres 30 et 40 sont réalisées dans un composite formé de filaments noyés dans une résine primaire et secondaire, les points de liaison peuvent avantageusement être réalisés par liaison de la résine secondaire des fibres de la couche carcasse et de la résine secondaire des fibres de la couche de sommet.

En particulier, dans le cas où les fibres 30 et 40 sont encollées au résorcinol-formaldéhyde-latex, on peut appliquer un agent de couplage tel que l'isocyanate sur la face intérieure des fibres 40, pour lier entre elles les résines secondaires des fibres 30 et 40.

Dans le cas où les fibres utilisées sont en acier, ces fibres peuvent avantageusement être laitonnées avant d'être encollées.

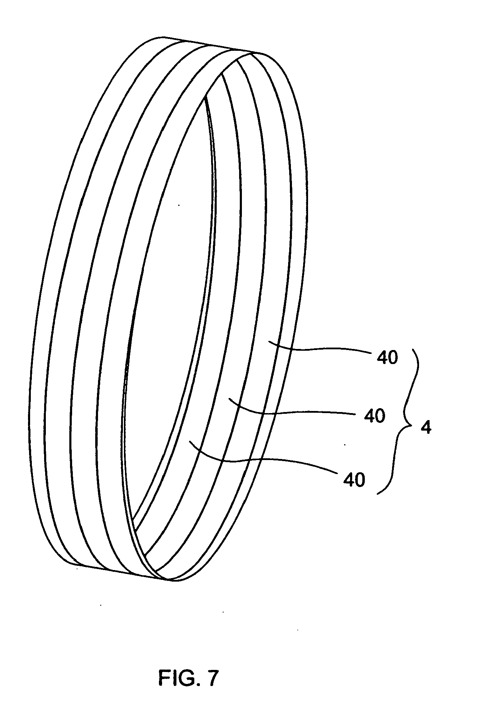

Quelle que soit la solution choisie pour lier l'une à l'autre les couches 3 et 4, la couche de sommet 4 peut être formée, comme le montre la figure 7, par enroulement circonférentiel hélicoïdal d'un ruban, les différentes spires de ce ruban constituant alors les différentes fibres 40 de cette couche 4.

Dans ce cas, plus le ruban utilisé est large, et plus l'angle A2 que forment les fibres 40 de la couche de sommet 4 avec le plan médian P du pneu est important.

Dans ce cas, il peut être utile de refendre le ruban en biseau sur les bords de l'enroulement hélicoïdal, de manière que ces bords s'inscrivent dans des plans respectifs parallèles au plan médian P.

Les dimensions w et t de chacune des fibres 30 de la couche carcasse 3, ainsi que le pas de pose de ces fibres, dépendent de nombreux paramètres d'architecture, de matériaux et de fonctionnement du pneumatique.

Plus la largeur w de la fibre 30 est importante et moins cette fibre aura tendance à fléchir dans le sens de la circonférence du pneu, mais plus grande sera la capacité de ce pneu à transmettre du couple.

Toutes grandeurs étant par ailleurs identiques, l'épaisseur t pourra être choisie d'autant plus faible que le module d'élasticité et la contrainte maximale admissible du matériau constitutif de cette fibre seront élevés.

Dans un mode de réalisation donné à titre d'exemple non limitatif, un pneu de véhicule tourisme conforme à l'invention et de dimensions 205/55 R16 peut utiliser, pour la constitution des fibres de la couche carcasse 3, un ruban d'acier présentant une largeur w de 0.7 mm, une épaisseur t de 0.09 mm, et une résistance à la rupture de 2800 MPa, ces fibres étant posées sur les tringles 5 à un pas de pose de 1 mm.

Les dimensions wz et tz de chacune des fibres 40 de la couche de sommet 4, ainsi que le pas de pose de ces fibres, dépendent elles aussi de nombreux paramètres d'architecture, des matériaux choisis et du fonctionnement du pneumatique.

Bien que les règles de conception soient pour l'essentiel communes avec celles de la couche carcasse et puissent être établies par l'homme du métier en respectant la structure de renfort telle que décrite et illustrée, il convient de porter une attention particulière, pour la couche de sommet 4, à la distance dz séparant deux fibres voisines 40.

Pour une rigidité maximale, les fibres voisines 40 peuvent être en contact l'une de l'autre dans la partie centrale du sommet, ce qui revient à donner une valeur nulle à la grandeur dz.

Dans le cas où les moyens de liaison comprennent une couche de gomme spécifique 21, les caractéristiques de cette couche de gomme interviennent également dans le choix des largeurs w et wz des fibres 30 et 40 par le couplage des couches 3 et 4, principalement par le module de cette gomme et par son épaisseur ti, qui est constante suivant la circonférence du pneu mais qui peut être variable dans un même plan méridien de ce pneu.

En effet, le couplage des couches 3 et 4 est principalement réalisé par toutes les zones rectangulaires de dimensions w par wz où la gomme 21 est à la fois couplée d'un côté à la couche 3 et de l'autre à la couche 4.

Pour obtenir une grande rigidité de dérive du pneu, il est préférable de choisir un plus petit nombre de zones de grandes dimensions w et wz qu'un plus grand nombre de zones de petites dimensions w et wz.

La rigidité de dérive pourrait être obtenue simplement en augmentant la largeur des fibres 40 de la couche de sommet 4, par exemple jusqu'à 80 mm au centre du sommet du pneu pour des fibres en acier.

Comme le montre la figure 6, la couche de sommet 4 peut être formée, sur ses bords c'est-à-dire au voisinage des épaules du pneu, de fibres 40a de largeur inférieure à celle des fibres 40 occupant une position plus proche du plan médian P du pneu.

En outre, les fibres externes 40a peuvent avantageusement être réalisées dans un matériau plus souple, et par exemple en aramide si les fibres plus internes 40 sont réalisées en acier, cet agencement permettant d'optimiser la résistance du pneu à la déformation dans la région des fibres 40a.

Les fibres internes 40 de la couche sommet 4 illustrée à la figure 6 peuvent quant à elles être constituées par des anneaux respectifs, en l'occurrence au nombre de quatre, ou par enroulement d'un seul ruban sur plusieurs spires, en l'occurrence quatre, comme illustré à la figure 7.

Outre le fait qu'il peut être réalisé par la mise en oeuvre d'un procédé plus simple que les pneus actuellement connus, le pneu de l'invention est plus léger et plus économique que ces derniers.

## Revendications

1. Pneu (1) comprenant une enveloppe étanche de gomme (2) et une structure de renfort (3, 4) essentiellement formée d'une pluralité de fibres (30, 40) individuellement noyées dans la gomme et agencées en plusieurs couches (3, 4), où en ce que cette structure de renfort (3, 4) est formée d'une couche carcasse (3), d'une couche de sommet (4), et de moyens de liaison (21), en ce que chaque fibre (30) de la couche carcasse (3) forme avec un plan médian (P) perpendiculaire à l'axe du pneu un premier angle (A1) compris entre 75 et 90 degrés, en ce que chaque fibre (40) de la couche de sommet (4) forme avec le plan médian (P) du pneu un deuxième angle (A2) compris entre 0 et 15 degrés, en ce que les moyens de liaison (21) lient entre elles les fibres de la couche carcasse (3) et de la couche sommet (4), **caractérisé en ce que** certaines au moins des fibres (30, 40) de la structure de renfort (3, 4) ont chacune une section transversale totalement connexe, de forme aplatie, et présentant des première et deuxième dimensions mutuellement orthogonales dont la première, ou épaisseur (t, tz), est inférieure à la deuxième dimension ou largeur (w, wz), et s'étend suivant une direction sensiblement radiale du pneu.

2. Pneu suivant la revendication 1, **caractérisé en ce que** la couche de sommet (4) comprend une fibre (40) conformée en virole et occupant la plus grande partie au moins de la largeur de la couche sommet (4).

3. Pneu suivant la revendication 1, **caractérisé en ce que** la couche carcasse (3) et la couche de sommet (4) comprennent chacune une pluralité de fibres (30, 40).

4. Pneu suivant l'une quelconque des revendications précédentes, **caractérisé en ce que** certaines au moins desdites fibres (30, 40) de section transversale aplatie sont formées chacune d'un seul filament.

5. Pneu suivant l'une quelconque des revendications 1 à 3, **caractérisé en ce que** certaines au moins desdites fibres (30, 40) de section transversale aplatie sont formées chacune d'une pluralité de filaments sensiblement parallèles entre eux et noyés dans une matrice assurant l'étanchéité et la cohésion de cette fibre.

6. Pneu suivant l'une quelconque des revendications précédentes, **caractérisé en ce que** lesdites fibres (30, 40) de section transversale aplatie sont réalisées chacune dans un matériau présentant un module de traction compris entre 3 GPa et 250 GPa, chaque fibre (40) de la couche de sommet (4) présentant un module de traction au moins égal à 30 GPa.

7. Pneu suivant l'une quelconque des revendications précédentes combinée à la revendication 3, **caractérisé en ce que** lesdites fibres (30, 40) de section transversale aplatie de chaque couche (3,4) présentent entre elles un écartement inférieur à 2 millimètres.

8. Pneu suivant l'une quelconque des revendications précédentes combinée à la revendication 3, **caractérisé en ce que** lesdites fibres (30, 40) de section transversale aplatie de chaque couche (3,4) présentent entre elles un écartement non nul et au plus égal à 1 millimètre.

9. Pneu suivant l'une quelconque des revendications précédentes, **caractérisé en ce que** lesdites fibres (30, 40) de section transversale aplatie sont réalisées dans un matériau choisi dans l'ensemble comprenant l'acier, l'aluminium, le verre, un polymère appartenant à la famille du polyester, du polyéthylène, du polyamide, de l'aramide, ou du polyvinylalcool, un composite formé de filaments de verre ou d'un tel polymère noyés dans une résine, et notamment un composite de filaments de polyéthylène encollés par du résorcinol-formaldéhyde-latex.

10. Pneu suivant l'une quelconque des revendications précédentes, **caractérisé en ce que** les moyens de liaison comprennent une couche de liaison (21) disposée entre la couche carcasse (3) et la couche de sommet (4) et les couplant l'une à l'autre.

11. Pneu suivant la revendication 10, **caractérisé en ce que** le matériau constituant la couche de liaison (21) présente un module d'extension sécant à 10% de déformation au moins égal à 50 MPa.

12. Pneu suivant l'une quelconque des revendications 10 et 11, **caractérisé en ce que** le matériau constituant la couche de liaison (21) comprend du polyester, une résine époxy, ou un matériau présentant un module d'extension sécant à 10% de déformation au moins égal au module d'extension du polyester ou de la résine époxy.

13. Pneu suivant l'une quelconque des revendications 10 à 1-2, **caractérisé en ce que** le matériau constituant la couche de liaison (21) présente un module d'extension sécant à 10% de déformation au plus égal à 300 MPa.

14. Pneu suivant l'une quelconque des revendications 1 à 9, **caractérisé en ce que** les moyens de liaison comprennent au moins des points de liaison liant directement et individuellement les fibres (30) de section transversale aplatie de la couche carcasse (3) à chaque fibre (40) de section transversale aplatie de la couche de sommet (4), la couche carcasse (3) et la couche de sommet (4) formant ainsi ensemble une structure grillagée.

15. Pneu suivant les revendications 9 et 14, **caractérisé en ce que** les fibres (30, 40) de section transversale aplatie des couches carcasse (3) et de sommet (4) sont réalisées dans un composite formé de filaments noyés dans une résine primaire et secondaire, et **en ce que** les points de liaison sont réalisés par liaison de la résine secondaire des fibres de la couche carcasse et de la résine secondaire des fibres de la couche de sommet.

16. Pneu suivant l'une quelconque des revendications précédentes à l'exclusion de la revendication 2, **caractérisé en ce que** la couche de sommet (4) est formée par un enroulement circonférentiel d'un ruban, dont les différentes spires constituent les différentes fibres (40) de cette couche (4).

17. Pneu suivant l'une quelconque des revendications précédentes, **caractérisé en ce que** chacune des fibres (30) de la couche carcasse (3) est repliée et maintenue à ses deux extrémités sur des tringles circulaires respectives (5) renforçant les talons internes (11) respectifs du pneu.

18. Pneu suivant l'une quelconque des revendications précédentes, **caractérisé en ce que** la couche de sommet (4) s'étend autour de la couche carcasse (3).

19. Pneu suivant l'une quelconque des revendications précédentes, **caractérisé en ce que** la couche de sommet (4) s'étend dans une zone restreinte, sensiblement parallèle à la bande de roulement (12).

20. Pneu suivant l'une quelconque des revendications précédentes, **caractérisé en ce que** les fibres (30, 40) présentent, en section, une largeur (w, wz) et une épaisseur (t, tz) dont le rapport (w/t; wz/tz) est au moins égal à cinq.

## Claims

1. Tyre (1) comprising an airtight rubber cover (2) and a reinforcing structure (3, 4) essentially formed of a plurality of fibres (30, 40) individually embedded in the rubber and arranged in several layers (3, 4), wherein this reinforcing structure (3, 4) is formed of a carcass layer (3), of a crown layer (4) and of connecting means (21), in that each fibre (30) of the carcass layer (3) makes a first angle (A1) of between 75 and 90 degrees with a median plane (P) perpendicular to the axis of the tyre, in that each fibre (40) of the crown layer (4) makes a second angle (A2) of between 0 and 15 degrees with the median plane (P) of the tyre, in that the connecting means (21) join together the fibres of the carcass layer (3) and of the crown layer (4), **characterised in that** at least some of the fibres (30, 40) of the reinforcing structure (3, 4) each have a completely connected cross section of flattened shape with first and second mutually orthogonal dimensions of which the first, or thickness (t, tz), is less than the second dimension, or width (w, wz), and runs in a substantially radial direction of the tyre.

2. Tyre according to Claim 1, **characterized in that** the crown layer (4) comprises a fibre (40) shaped as an annular band and occupying at least most of the width of the crown layer (4).

3. Tyre according to Claim 1, **characterized in that** the carcass layer (3) and the crown layer (4) each comprise a plurality of fibres (30, 40).

4. Tyre according to any one of the preceding claims, **characterized in that** at least some of the said fibres (30, 40) of flattened cross section are each formed of a single filament.

5. Tyre according to any one of Claims 1 to 3, **characterized in that** at least some of the said fibres (30, 40) of flattened cross section are each formed of a plurality of substantially mutually parallel filaments embedded in a matrix that gives this fibre its airtightness and cohesion.

6. Tyre according to any one of the preceding claims, **characterized in that** the said fibres (30, 40) of flattened cross section are each made of a material that has a tensile modulus of between 3 GPa and 250 GPa, each fibre (40) of the crown layer (4) having a tensile modulus of at least 30 GPa.

7. Tyre according to any one of the preceding claims combined with Claim 3, **characterized in that** the said fibres (30, 40) of flattened cross section of each layer (3, 4) have a mutual separation of less than 2 millimetres.

8. Tyre according to any one of the preceding claims combined with Claim 3, **characterized in that** the said fibres (30, 40) of flattened cross section of each layer (3, 4) have a non-zero mutual separation of 1 millimetre at most.

9. Tyre according to any one of the preceding claims, **characterized in that** the said fibres (30, 40) of flattened cross section are made of a material chosen from the group comprising steel, aluminium, glass, a polymer belonging to the family of polyester, polyethylene, polyamide, aramid or polyvinyl alcohol, a composite formed of filaments of glass or of such a polymer embedded in a resin, and particularly a composite of polyethylene filaments coated with resorcinol-formaldehyde-latex.

10. Tyre according to any one of the preceding claims, **characterized in that** the connecting means comprise a connecting layer (21) positioned between the carcass layer (3) and the crown layer (4) and coupling these together.

11. Tyre according to Claim 10, **characterized in that** the material of which the connecting layer (21) is made has a secant tensile modulus at 10% deformation of at least 50 MPa.

12. Tyre according to either one of Claims 10 and 11, **characterized in that** the material of which the connecting layer (21) is made comprises polyester, an epoxy resin, or a material that has a secant tensile modulus at 10% deformation at least equal to the tensile modulus of polyester or of epoxy resin.

13. Tyre according to any one of Claims 10 to 12, **characterized in that** the material of which the connecting layer (21) is made has a secant tensile modulus at 10% deformation at most equal to 300 MPa.

14. Tyre according to any one of Claims 1 to 9, **characterized in that** the connecting means comprise at least connecting points directly and individually connecting the fibres (30) of flattened cross section belonging to the carcass layer (3) to each fibre (40) of flattened cross section belonging to the crown layer (4), the carcass layer (3) and the crown layer (4) thus together forming a grid structure.

15. Tyre according to Claims 9 and 14, **characterized in that** the fibres (30, 40) of flattened cross section belonging to the carcass (3) and crown (4) layers are made of a composite formed of filaments embedded in a primary and secondary resin, and **in that** the connecting points are created by connecting the secondary resin of the fibres of the carcass layer with the secondary resin of the fibres of the crown layer.

16. Tyre according to any one of the preceding claims with the exception of claim 2, **characterized in that** the crown layer (4) is formed of a circumferential winding of a tape, the various turns of which constitute the various fibres (40) of this layer (4).

17. Tyre according to any one of the preceding claims, **characterized in that** each of the fibres (30) of the carcass layer (3) is folded round and held at its two ends on respective circular bead wires (5) that reinforce the respective internal beads (11) of the tyre.

18. Tyre according to any one of the preceding claims, **characterized in that** the crown layer (4) extends around the carcass layer (3).

19. Tyre according to any one of the preceding claims, **characterized in that** the crown layer (4) extends in a restricted zone substantially parallel to the tread (12).

20. Tyre according to any one of the preceding claims, **characterized in that** the fibres (30, 40) have, in cross section, a width (w, wz) and a thickness (t, tz) of which the ratio (w/t; wz/tz) is at least equal to five.

## Patentansprüche

1. Reifen (1), der eine dichte Gummihülle (2) und eine Verstärkungsstruktur (3, 4) enthält, die im Wesentlichen aus einer Vielzahl von Fasern (30, 40) geformt ist, welche einzeln in den Gummi eingebettet und in mehreren Schichten (3, 4) angeordnet sind, wobei diese Verstärkungsstruktur (3, 4) von einer Karkassenschicht (3), einer Scheitelschicht (4) und von Verbindungseinrichtungen (21) geformt wird, jede Faser (30) der Karkassenschicht (3) mit einer Mittelebene (P) lotrecht zur Achse des Reifens einen ersten Winkel (A1) zwischen 75 und 90 Grad bildet, jede Faser (40) der Scheitelschicht (4) mit der Mittelebene (P) des Reifens einen zweiten Winkel (A2) formt, der zwischen 0 und 15 Grad liegt, die Verbindungseinrichtungen (21) die Fasern der Karkassenschicht (3) und der Scheitelschicht (4) miteinander verbinden, **dadurch gekennzeichnet, dass** zumindest bestimmte der Fasern (30, 40) der Verstärkungsstruktur (3, 4) je einen Querschnitt haben, der vollständig zusammenhängend, von abgeflachter Form ist und erste und zweite zueinander orthogonale Abmessungen aufweist, von denen die erste Abmessung oder Dicke (t, tz) geringer als die zweite Abmessung oder Breite (w, wz) ist und sich in einer im Wesentlichen radialen Richtung des Reifens erstreckt.

2. Reifen nach Anspruch 1, **dadurch gekennzeichnet, dass** die Scheitelschicht (4) eine Faser (40) enthält, die spiralförmig ist und mindestens den größten Teil der Breite der Scheitelschicht (4) einnimmt.

3. Reifen nach Anspruch 1, **dadurch gekennzeichnet, dass** die Karkassenschicht (3) und die Scheitelschicht (4) je eine Vielzahl von Fasern (30, 40) enthalten.

4. Reifen nach einem der vorhergehenden Ansprüche, **dadurch gekennzeichnet, dass** zumindest bestimmte der Fasern (30, 40) mit abgeflachtem Querschnitt je aus einem einzigen Filament geformt sind.

5. Reifen nach einem der Ansprüche 1 bis 3, **dadurch gekennzeichnet, dass** zumindest bestimmte der Fasern (30, 40) mit abgeflachtem Querschnitt je von einer Vielzahl von im Wesentlichen parallel zueinander liegenden und in eine Matrix eingebetteten Filamenten geformt werden, die die Dichtheit und die Kohäsion dieser Faser gewährleistet.

6. Reifen nach einem der vorhergehenden Ansprüche, **dadurch gekennzeichnet, dass** die Fasern (30, 40) mit abgeflachtem Querschnitt je aus einem Material hergestellt sind, das einen Zugmodul zwischen 3 GPa und 250 GPa aufweist, wobei jede Faser (40) der Scheitelschicht (4) einen Zugmodul mindestens gleich 30 GPa aufweist.

7. Reifen nach einem der vorhergehenden Ansprüche kombiniert mit Anspruch 3, **dadurch gekennzeichnet, dass** die Fasern (30, 40) mit abgeflachtem Querschnitt jeder Schicht (3, 4) zwischen sich einen Abstand von weniger als 2 Millimeter aufweisen.

8. Reifen nach einem der vorhergehenden Ansprüche kombiniert mit Anspruch 3, **dadurch gekennzeichnet, dass** die Fasern (30, 40) mit abgeflachtem Querschnitt jeder Schicht (3, 4) zwischen sich einen Abstand ungleich Null und höchstens gleich 1 Millimeter aufweisen.

9. Reifen nach einem der vorhergehenden Ansprüche, **dadurch gekennzeichnet, dass** die Fasern (30, 35 40) mit abgeflachtem Querschnitt aus einem Material hergestellt sind, das aus der Gruppe ausgewählt wird, die Stahl, Aluminium, Glas, ein Polymer, das zur Familie von Polyester, Polyethylen, Polyamid, Aramid oder Polyvinylalkohol gehört, einen Verbundwerkstoff, der von Filamenten aus Glas oder aus einem solchen in ein Harz eingebettetem Polymer geformt wird, und insbesondere einen Verbundwerkstoff von Polyethylenfilamenten enthält, die durch Resorcin-Formaldehyd-Latex verleimt sind.

10. Reifen nach einem der vorhergehenden Ansprüche, **dadurch gekennzeichnet, dass** die Verbindungseinrichtungen eine Verbindungsschicht (21) enthalten, die zwischen der Karkassenschicht (3) und der Scheitelschicht (4) angeordnet ist und sie miteinander verbindet.

11. Reifen nach Anspruch 10, **dadurch gekennzeichnet, dass** das die Verbindungsschicht (21) bildende Material einen Sekanten-Dehnungsmodul bei 10 % Verformung mindestens gleich 50 MPa aufweist.

12. Reifen nach einem der Ansprüche 10 und 11, **dadurch gekennzeichnet, dass** das die Verbindungsschicht (21) bildende Material ein Polyester, ein Epoxidharz oder ein Material enthält, das einen Sekanten-Dehnungsmodul bei 10 % Verformung mindestens gleich dem Dehnungsmodul des Polyesters oder des Epoxidharzes aufweist.

13. Reifen nach einem der Ansprüche 10 bis 12, **dadurch gekennzeichnet, dass** das die Verbindungsschicht (21) bildende Material einen Sekanten-Dehnungsmodul bei 10 % Verformung höchstens gleich 300 MPa aufweist.

14. Reifen nach einem der Ansprüche 1 bis 9, **dadurch gekennzeichnet, dass** die Verbindungseinrichtungen mindestens Verbindungspunkte enthalten, die die Fasern (30) mit abgeflachtem Querschnitt der Karkassenschicht (3) direkt und einzeln mit jeder Faser (40) mit abgeflachtem Querschnitt der Scheitelschicht (4) verbinden, wobei die Karkassenschicht (3) und die Scheitelschicht (4) so zusammen eine Gitterstruktur bilden.

15. Reifen nach den Ansprüchen 9 und 14, **dadurch gekennzeichnet, dass** die Fasern (30, 40) mit abgeflachtem Querschnitt der Karkassen- (3) und Scheitelschichten (4) aus einem Verbundwerkstoff hergestellt sind, der aus in ein Primärharz und ein Sekundärharz eingebetteten Filamenten besteht, und dass die Verbindungspunkte durch Verbindung des Sekundärharzes der Fasern der Karkassenschicht und des Sekundärharzes der Fasern der Scheitelschicht hergestellt werden.

16. Reifen nach einem der vorhergehenden Ansprüche mit Ausnahme von Anspruch 2, **dadurch gekennzeichnet, dass** die Scheitelschicht (4) durch eine Umfangsumwicklung eines Bands geformt wird, dessen verschiedene Windungen die verschiedenen Fasern (40) dieser Schicht (4) bilden.

17. Reifen nach einem der vorhergehenden Ansprüche, **dadurch gekennzeichnet, dass** jede der Fasern (30) der Karkassenschicht (3) umgebogen und an ihren beiden Enden auf kreisförmigen Wulstkernen (5) gehalten wird, die die inneren Wülste (11) des Reifens verstärken.

18. Reifen nach einem der vorhergehenden Ansprüche, **dadurch gekennzeichnet, dass** die Scheitelschicht (4) sich um die Karkassenschicht (3) herum erstreckt.

19. Reifen nach einem der vorhergehenden Ansprüche, **dadurch gekennzeichnet, dass** die Scheitelschicht (4) sich in einer begrenzten Zone im Wesentlichen parallel zum Laufstreifen (12) erstreckt.

20. Reifen nach einem der vorhergehenden Ansprüche, **dadurch gekennzeichnet, dass** die Fasern (30, 40) im Querschnitt eine Breite (w, wz) und eine Dicke (t, tz) aufweisen, deren Verhältnis (w/t; wz/tz) mindestens gleich fünf ist.
